# EUROPEAN PATENT SPECIFICATION

(11) **EP 1 693 293 B1**
(45) Date of publication and mention of the grant of the patent: **23.04.2008**
(21) Application number: 06101180.5
(22) Date of filing: 02.02.2006
(51) Int. Cl.: B62M 7/02

(54) **Transmission system**
Kraftübertragungssystem
Système de transmission de puissance

(30) Priority: 18.02.2005 IT MI20050248
(43) Date of publication of application: 23.08.2006
(73) Proprietor: PIAGGIO & C. S.p.A., 56025 Pontedera (Pisa) (IT)
(72) Inventor: MARCACCI, Maurizio, 57128, LIVORNO (IT)
(74) Representative: De Gregori, Antonella

(56) References cited:
- EP-A- 1 495 957
- US-A1- 2004 124 032

## Description

The present invention relates to a two-wheeled motor vehicle.

More specifically, the invention relates to two-wheeled vehicle with a system of the type transmission studied and produced in particular for reducing the passage of the vibrations produced for example by an internal combustion engine, for reducing the torsional effects with respect to the vertical plane of a motorcycle and for allowing the engine to have no direct connections with the chassis thus enabling it to move freely, but which can be used for any system or means equivalent to that indicated.

It is well known that at present the performances of the propellers of motorcycles, and scooters in particular, are very rapidly increasing. This creates the necessity of envisaging particular attention, in the project phase, to providing motorcycles with systems capable of guaranteeing driving comfort and therefore a reduction in the vibrations and safety for the driver.

Devices are currently known which allow the dampening of vibrations, said devices comprising mechanical articulations such as oscillating arms and/or pads, inserted between the engine group and the chassis.

Due to the increase in the propulsive power, the presence of these devices, however, does not allow an effective blocking of the passage of vibrations from the engine group to the chassis.

US 2004/124 032 describes a two-wheeled vehicle with a transmission system according to the preamble of claim 1

In view of what is specified above, there is the evident necessity for providing a two-wheeled vehicle with a transmission system, such as that according to the present invention, which minimizes the propagation of vibrations and at the same time guarantees a perfect alignment between the pinion axis and the back wheel axis.

An objective of the present invention is therefore to solve the problems of the known art by providing a coupling system between the engine group and the chassis which effectively reduces the passage of vibrations between the chassis and engine group.

Another objective of the present invention is to provide a two-wheeled vehicle with a transmission system which allows a perfect alignment between the pinion axis and the back wheel axis.

Finally, a further objective of the present invention is to provide a two-wheeled vehicle with a transmission system having extreme structural and functional simplicity.

These and other objectives are achieved by the two-wheeled vehicle with the transmission system according to the present invention which has the characteristics indicated in the enclosed claim 1.

Further characteristics and advantages of the present invention will appear more evident from the present description, provided for illustrative and nonlimiting purposes, with reference to the enclosed drawings, in which:
- figure 1 shows a schematic side view of a first embodiment of the transmission system according to the present invention;
- figure 2 is a schematic view of the transmission group of the engine torque of the first embodiment of the transmission system according to the present invention, illustrated in figure 1; and
- figure 3 shows a schematic side view of a second embodiment of the transmission system according to the present invention.

With reference to the enclosed figures, these illustrate a scooter, comprising the transmission system 100 according to the present invention.

The transmission system 100 of a vehicle of the type equipped with an engine group 1, constrained by fixing means 4 to the chassis 5 of the vehicle, a transmission pinion 2 for transferring the movement of the driving wheel 27 and a transfer group 3 of the engine torque between the engine group 1 and the pinion 2.

The transfer group 3 according to the present invention advantageously comprises at least two articulations 14, 15 in the preferred embodiment illustrated in the figures, of which the first is functionally connected to the engine group 1 and the second is functionally connected to the pinion 2. The two articulations 14, 15 are connected to each other by at least one connection shaft 7.

As shown in the figures, thanks to the articulations 14, 15, the vibrations from the engine group 1 to the transmission are not transmitted or in any case are significantly reduced.

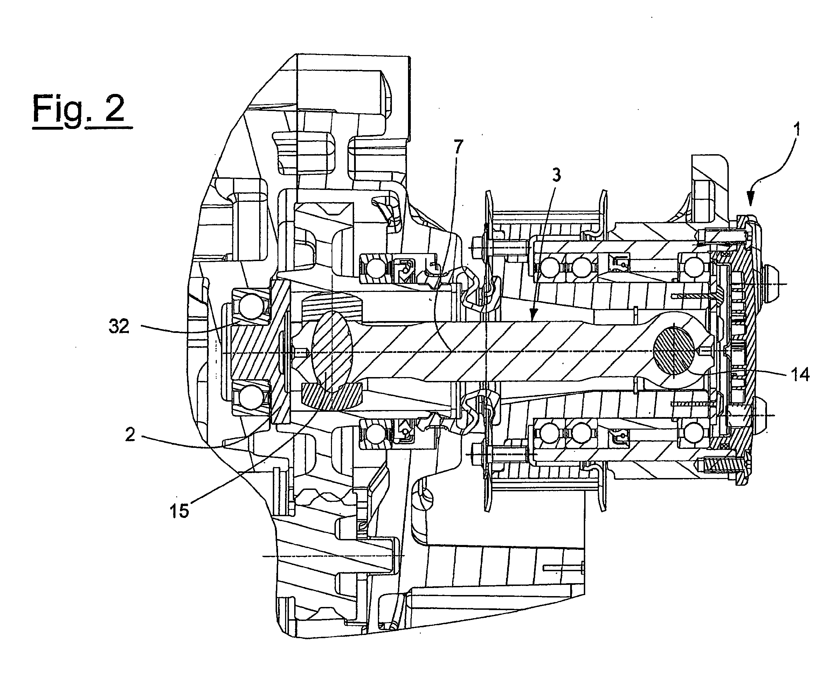

As can be seen in figure 2, the two articulations 14, 15 are produced with universal joints but can also be produced with constant-velocity joints, also included in the protection scope of the present invention.

The housing of a joint 14 on the engine group 1 substitutes its outlet shaft. Through the connection shaft 7, the joint 14 on the engine 1 transmits the movement to the other joint 15 connected to the pinion 2.

The two articulations or joints 14, 15 according to the present invention, are advantageously free to slide longitudinally with respect to their own axes, in order to recuperate the variations in distance between the two joints 14, 15 due to the relative movement between the engine group 1 and the pinion 2.

For the same purpose, as an alternative or in addition to the connection shaft 7, there can also be a telescopic shaft.

The fixing means of the engine group 1 to the chassis 5 comprise elastic fixing means and/or articulated fixing means, such as arms, pads and silent-blocks, which limit the passage of vibrations of the engine group 1 to the rest of the vehicle.

According to a first embodiment, the fixing means comprise a rod connected in the front to the engine group 1 and a pair of pads and/or silent-blocks constrained to the chassis 5 and to the rod.

Said pads and/or silent-blocks have a varying hardness in the vertical, horizontal and transversal planes to support the engine group 1 and at the same time to guarantee freedom of movement necessary for limiting the passage of vibrations.

The fixing means also comprise two roll cases, situated behind on the engine group 1 and two connecting rods.

Each connecting rod is hinged at one end to a case and at the other end to a silent-block having its fulcrum, in turn, on the chassis 5 so as to allow the rotation of the connecting rod.

As an alternative to the silent-blocks, bearings or other elements can be used, easily available to experts in the field, which allow the rotation of the connecting rods.

Alternatively, in front of the engine group 1, one or more connecting rods can be envisaged, hinged to the engine group 1 and to the chassis 5, possibly by means of silent-blocks and/or pads.

The pinion 2 transmits movement to the rear wheel 27 by means of a final chain or belt transmission device 26.

A fork 28 is envisaged in the known way, between the pinion 2 and the rear wheel 27. In particular, the rear fork 28 is situated between the pinion 2 and a guiding wheel 29 constrained to the rear wheel 27.

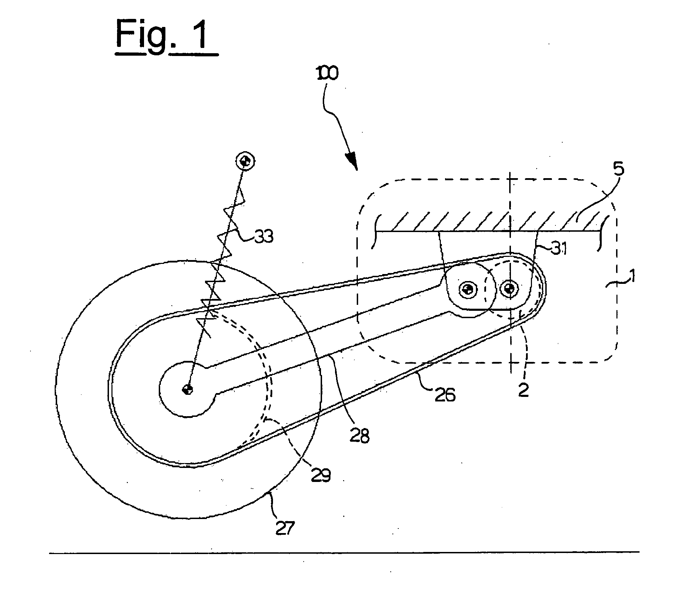

In a first embodiment, shown in figure 1, the pinion 2 is constrained to the chassis 5 by means of a bracketed side support 31. In this way, there are no direct connections between the chassis 5 and the engine group 1 which can therefore move freely, without transmitting vibrations to the chassis 5. In particular, the pinion 2, as better illustrated in figure 2, rotates on bearings 32 housed by the bracketed support 31 fixed to the chassis 5.

According to this first embodiment, the rear fork 28 advantageously has its fulcrum both directly on the chassis 5 and also by means of the bracketed support 31, and rotates on roll cases and ball-bearings, not directly visible, contained by the same fork 28.

The front fork, not shown, is hinged to the chassis and rotates on ball-bearings contained in the short tube. The front and rear suspensions are therefore coupled with the chassis by means of bearings, the whole cycle portion of the vehicle thus driven guarantees a high driving precision.

The absence of elastic elements in the connection between the fork 28 and the chassis 5, which supports the pinion 2, enables the axes of the pinion 2, the fulcrum of the fork 28 and therefore the rear wheel 27, to be kept parallel for the whole movement of the rear suspension 33. The parallelism of the axes improves the operation of the device with a final transmission 26, from the pinion 2 to the rear wheel 27, which can be effected, as mentioned above, with a roll chain or, alternatively, with a toothed belt.

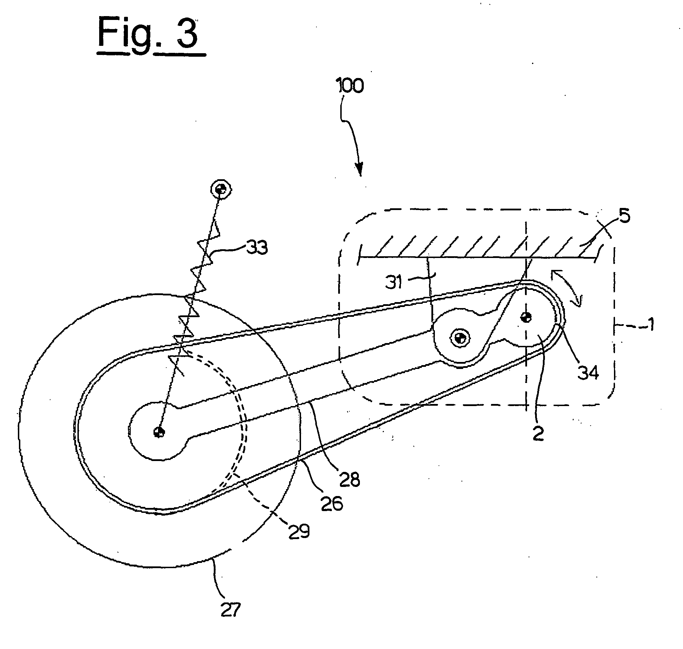

Figure 3 shows a second embodiment of the transmission system 100 according to the present invention, completely similar to that illustrated in figure 1 except for the fact that the pinion 2 is integral with the fork 28. In other words, the pinion 2 is not supported by the bracketed support 31, but by the fork 28 itself.

In detail, the pinion 2 is supported by a protruding end 34 of the fork 28.

The fork 2, on the other hand, as shown in the embodiment of figure 1, is supported by the chassis, by means of a bracketed support 31, which, as better illustrated in the figure, has a different shaping with respect to the former.

According to this embodiment, the wheelbase between the pinion 2 and the guiding wheel is kept constant, there is an increase however in the relative movement between the pinion 2 and the engine group 1. In this scheme, in fact, the transmission system allows both the movement of the engine on its elastic supports and that of the pinion 2 which follows the movements of the rear suspension. The simultaneous presence on the fork 28 of the rotation axes of the pinion 2, the fulcrum of the fork 28 and the rear wheel, enables the optimum functioning of the final transmission which in this case keeps the assembly pretensioning constant.

On the basis of the above description, it can be observed that the fundamental advantage of the present invention is to reduce the passage of vibrations from the engine to the vehicle and free the engine with respect to the chassis.

The different radial, axial and torsional rigidities of the silent-blocks and fixing means 4, give the engine group 1 the freedom of movement necessary for limiting the passage of vibrations and contrasting the movements which influence the driving of the vehicle.

Furthermore, the presence of joints between the engine group 1 and the pinion 2 allows there to be no direct connections between the chassis and the engine group which can consequently move freely.

## Claims

1. A two-wheeled vehicle with a transmission system (100) of the type equipped with an engine group (1), constrained by fixing means to the chassis (5) of the vehicle, a transmission pinion (2) which transfers the movement to the back wheel (27) and a transfer group (3) of the engine torque between the engine group (1) and said pinion (2), **characterized in that** said transfer group (3) comprises two articulations (14, 15) of which the first is functionally connected to said engine group (1) and the second is functionally connected to said pinion (2), said at least two articulations (14, 15) being connected with each other by at least one connection shaft (7).

2. The two-wheeled vehicle according to claim 1, **characterized in that** said at least two articulations (14, 15) are universal joints.

3. The two-wheeled vehicle according to claim 1, **characterized in that** said at least two articulations (14, 15) are constant-velocity joints.

4. The two-wheeled vehicle according to any of the previous claims, **characterized in that** said at least two articulations (14, 15) are free to move along their own rotation axes.

5. The two-wheeled vehicle according to any of the previous claims, **characterized in that** said at least one connection shaft (7) is a telescopic shaft.

6. The two-wheeled vehicle according to any of the previous claims, **characterized in that** said fixing means of the engine group (1) to said chassis (5) comprise elastic fixing means and/or articulation fixing means to reduce the passage of vibrations of said engine group (1) to said chassis (5).

7. The two-wheeled vehicle according to claim 6, **characterized in that** said fixing means comprise a rod connected in the front to said engine group (1) and at least one pair of pads and/or silent-blocks constrained to said chassis (5) and to said rod.

8. The two-wheeled vehicle according to claims 6 or 7, **characterized in that** said fixing means comprise at least one roll case, at least one connecting rod hinged at one end to said at least one case and at the other end to at least one silent-block, in turn, having its fulcrum on said chassis (5) so as to allow the rotation of said connecting rod.

9. The two-wheeled vehicle according to any of the previous claims, **characterized in that** said pinion (2) transmits the movement to said rear wheel (27) by means of a final chain or belt transmission device (26).

10. The two-wheeled vehicle according to any of the previous claims, **characterized in that** it comprises a fork (28) between said pinion (2) and said rear wheel (27) and at least one bracketed support (31) for supporting said rear fork (28) to the chassis (5).

11. The two-wheeled vehicle according to any of the previous claims, **characterized in that** said pinion (2) is supported rotationally to said bracketed support (31) .

12. The two-wheeled vehicle according to any of the claims from 1 to 10, **characterized in that** said pinion (2) is integral with said rear fork (28).

## Patentansprüche

1. Zweiradfahrzeug mit einem Getriebesystem (100) von der Art, die mit einer Motorgruppe (1), die durch Befestigungsmittel an dem Chassis (5) des Fahrzeugs gehaltert ist, einem Getrieberitzel (2), das die Bewegung auf das Hinterrad (27) überträgt, und mit einer Verteilergruppe (3) des Motordrehmoments zwischen der Motorgruppe (1) und dem Ritzel (2) ausgestattet ist, **dadurch gekennzeichnet, dass** die Verteilergruppe (3) zwei Gelenke (14, 15) umfasst, von denen das erste funktional mit der Motorgruppe (1) verbunden ist und das zweite funktional mit dem Ritzel (2) verbunden ist, wobei die zumindest zwei Gelenke (14, 15) durch zumindest eine Verbindungswelle (7) miteinander verbunden sind.

2. Zweiradfahrzeug nach Anspruch 1, **dadurch gekennzeichnet, dass** die zumindest zwei Gelenke (14, 15) Universalgelenke sind.

3. Zweiradfahrzeug nach Anspruch 1, **dadurch gekennzeichnet, dass** die zumindest zwei Gelenke (14, 15) Gleichlaufgelenke sind.

4. Zweiradfahrzeug nach einem der vorhergehenden Ansprüche, **dadurch gekennzeichnet, dass** die zumindest zwei Gelenke (14, 15) frei sind, sich entlang ihrer eigenen Drehachsen zu bewegen.

5. Zweiradfahrzeug nach einem der vorhergehenden Ansprüche, **dadurch gekennzeichnet, dass** die zumindest eine Verbindungswelle (7) eine Teleskopwelle ist.

6. Zweiradfahrzeug nach einem der vorhergehenden Ansprüche, **dadurch gekennzeichnet, dass** die Befestigungsmittel der Motorgruppe (1) an dem Chassis (5) ein elastisches Befestigungsmittel und/oder ein Gelenkbefestigungsmittel umfassen, um den Durchgang von Schwingungen der Motorgruppe (1) zu dem Chassis (5) zu vermindern.

7. Zweiradfahrzeug nach Anspruch 6, **dadurch gekennzeichnet, dass** die Befestigungsmittel einen Stab, der vor der Motorgruppe (1) angeschlossen ist, und zumindest ein Paar Polster und/oder Silent-Blocks umfassen, die an dem Chassis (5) und an dem Stab gehaltert sind.

8. Zweiradfahrzeug nach Anspruch 6 oder 7, **dadurch gekennzeichnet, dass** die Befestigungsmittel zumindest ein Rollgehäuse, zumindest einen Verbindungsstab, der an einem Ende an dem mindestens einen Gehäuse und an dem anderen Ende an dem zumindest einen Silent-Block angelenkt ist, umfassen, dessen Drehpunkt wiederum an dem Chassis (5) liegt, um eine Rotation des Verbindungsstabs zuzulassen.

9. Zweiradfahrzeug nach einem der vorhergehenden Ansprüche, **dadurch gekennzeichnet, dass** das Ritzel (2) die Bewegung auf das Hinterrad (27) mittels einer Endantriebskette oder einer Riemenübertragungsvorrichtung (26) überträgt.

10. Zweiradfahrzeug nach einem der vorhergehenden Ansprüche, **dadurch gekennzeichnet, dass** es eine Gabel (28) zwischen dem Ritzel (2) und dem Hinterrad (27) und zumindest einen Befestigungsträger (31) zum Tragen der hinteren Gabel (28) an dem Chassis (5) umfasst.

11. Zweiradfahrzeug nach einem der vorhergehenden Ansprüche, **dadurch gekennzeichnet, dass** das Ritzel (2) rotatorisch an dem Befestigungsträger (31) gelagert ist.

12. Zweiradfahrzeug nach einem der Ansprüche 1 bis 10, **dadurch gekennzeichnet, dass** das Ritzel (2) integral mit der hinteren Gabel (28) ist.

## Revendications

1. Véhicule à deux roues ayant un système de transmission (100) du type équipé d'un groupe moteur (1), fixé par un moyen de fixation au châssis (5) du véhicule, un pignon de transmission (2) qui transfère le mouvement à la roue arrière (27), et un groupe de transfert (3) du couple moteur entre le groupe moteur (1) et ledit pignon (2), **caractérisé en ce que** ledit groupe de transfert (3) comprend deux articulations (14, 15), dont la première est raccordée de façon fonctionnelle audit groupe moteur (1), et la deuxième est raccordée de façon fonctionnelle audit pignon (2), lesdites au moins deux articulations (14, 15) étant raccordées l'une à l'autre grâce à au moins un arbre de raccordement (7).

2. Véhicule à deux roues selon la revendication 1, **caractérisé en ce que** lesdites au moins deux articulations (14, 15) sont des joints de Cardan.

3. Véhicule à deux roues selon la revendication 1, **caractérisé en ce que** lesdites au moins deux articulations (14, 15) sont des joints à vitesse constante.

4. Véhicule à deux roues selon l'une quelconque des revendications précédentes, **caractérisé en ce que** lesdites au moins deux articulations (14, 15) sont libres de se déplacer le long de leur propre axe de rotation.

5. Véhicule à deux roues selon l'une quelconque des revendications précédentes, **caractérisé en ce que** ledit au moins un arbre de raccordement (7) est un arbre télescopique.

6. Véhicule à deux roues selon l'une quelconque des revendications précédentes, **caractérisé en ce que** ledit moyen de fixation du groupe moteur (1) audit châssis (5) comprend un moyen de fixation élastique et/ou un moyen de fixation articulé pour réduire le passage des vibrations dudit groupe moteur (1) audit châssis (5).

7. Véhicule à deux roues selon la revendication 6, **caractérisé en ce que** ledit moyen de fixation comprend une tige raccordée à l'avant audit groupe moteur (1), et au moins une paire de coussins et/ou de supports élastiques fixés audit châssis (5) et à ladite tige.

8. Véhicule à deux roues selon les revendications 6 ou 7, **caractérisé en ce que** ledit moyen de fixation comprend au moins un convoyeur à rouleau, au moins une tige de raccordement fixée par charnière au niveau d'une extrémité audit au moins un boîtier et à l'autre extrémité à au moins un support élastique, ayant à son tour son point d'appui sur ledit châssis (5), de manière à permettre la rotation de ladite tige de raccordement.

9. Véhicule à deux roues selon l'une quelconque des revendications précédentes, **caractérisé en ce que** ledit pignon (2) transmet le mouvement à ladite roue arrière (27) au moyen d'un dispositif de transmission par chaîne ou courroie finale (26).

10. Véhicule à deux roues selon l'une quelconque des revendications précédentes, **caractérisé en ce qu'**il comprend une fourche (28) entre ledit pignon (2) et ladite roue arrière (27) et au moins un étrier support (31) permettant que le châssis (5) supporte ladite fourche arrière (28).

11. Véhicule à deux roues selon l'une quelconque des revendications précédentes, **caractérisé en ce que** ledit pignon (2) est supporté pour tourner sur ledit étrier support (31).

12. Véhicule à deux roues selon l'une quelconque des revendications 1 à 10, **caractérisé en ce que** ledit pignon (2) est solidaire avec ladite fourche arrière (28).
